# EUROPEAN PATENT APPLICATION

(11) **EP 1 914 859 A1**
(43) Date of publication of application: **23.04.2008**
(21) Application number: 06021702.3
(22) Date of filing: 17.10.2006
(51) Int. Cl.: H02J 7/00

(54) **Extendable and angle-adjustable solar charger**

(71) Applicant: Samya Technology Co., Ltd., Taoyuan City Taoyuan Country 330 (TW)
(72) Inventor: Yang, Fu-I, Taoyuan City Taoyuan County 330 (TW)
(74) Representative: Casalonga, Axel

(57) **Abstract**

An extendable and angle-adjustable solar charger includes a charging base (20) having a charging slot (21) for charging a rechargeable battery and a charge control circuit (22); a solar panel (30) having a solar chip (32) and a substrate (31) for positioning the solar chip; and two parallel extending elements (40) made of a conductive material and having a first pivoting portion (41) pivotally and electrically coupled to positive and negative terminals (221) of the charge control circuit (22), and a second pivoting portion (42) pivotally and electrically coupled to anode and cathode plates (321) of the solar panel (30). The solar panel (30) can be folded onto the charging base for storage, or spread open for use. The first and second pivoting portions can adjust the light absorption position and the angle of elevation towards light to enhance the solar energy conversion efficiency, protect the charging base from direct sunlight and rain, so as to improve the life expectancy and safety.

## Description

The invention relates to a solar charger, and more particularly to a solar charger having a solar panel extendable outward from a charger base to provide a better position and a better angle for receiving sunlight and solar energy.

In various different portable electronic products such as a MP3, a personal digital assistant PDA, a notebook computer, an electronic dictionary and a digital camera, batteries are necessary equipment. Among various different batteries, a rechargeable battery is extensively used due to its cost-effective way of supplying power and its compliance with the requirements of environmental protections.

In general, a battery charger is needed for charging rechargeable batteries, and a traditional battery charger converts public utility power into a charging power with a specific voltage potential by a transformer and then charges the rechargeable batteries. However, the charging power cannot be obtained outdoors, and the charger will become useless and that is very inconvenient to users.

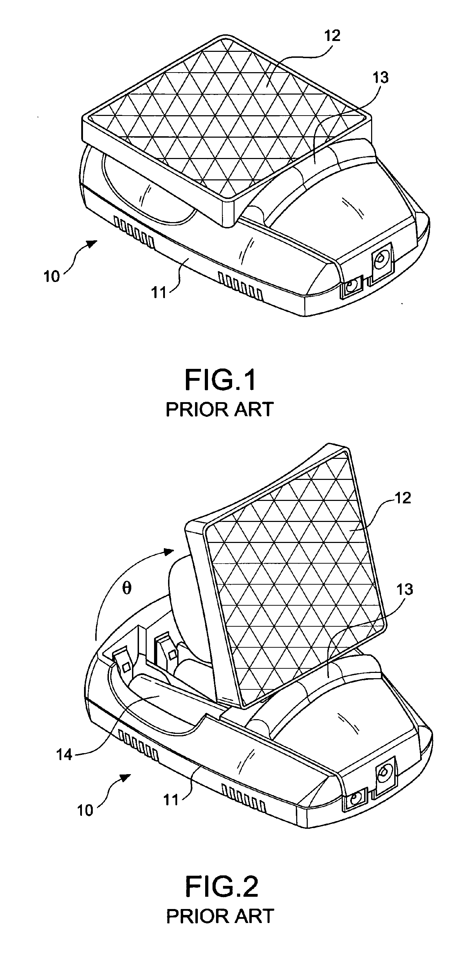

As the shortage of electric energy becomes more seriously day after day, the cost for electric energy becomes increasingly higher, and thus the inexhaustible solar energy is under studied and developed extensively. Referring to FIGS. 1 and 2 respectively for a perspective view and a schematic view of a solar panel charger 10 disclosed in R.O.C. Pat. No. M294155, the main structure is constructed on the charging base 11 and connected by a pivoting element 13. The solar panel charger 10 includes a solar panel 12 that can be lifted open or shut. However, such solar panel 12 cannot be lifted upward or extended to the edges, and thus the best position for the use cannot be obtained. In other words, the solar panel 12 can be lifted to an angle θ only by using the pivoting element 13 as an axial center, and thus the light absorption position and the angle of elevation towards light of the solar panel 12 cannot be obtained by extending the solar panel 12 horizontally or obliquely. Since the energy conversion efficiency of the solar panel 12 is a percentage of the inputted solar radiation energy and the outputted electric energy at the terminals of the solar panel, the efficiency will change as the spectrum of the incident light of the solar panel changes. Under the sun, the solar panel 12 can be adjusted to a better light absorption position and a better angle of elevation towards light to provide a better energy conversion efficiency.

In addition, another drawback of the solar charger 10 resides on that the solar panel 12 is integrated with the charging base 11, such that if the sunlight is projected onto the solar panel 12, the rechargeable batteries 14 placed in the charging base 11 will be under the direct sunlight as well. If the ambient temperature of the rechargeable batteries 14 (regardless ofNi-Cd batteries, Ni-H batteries or Li batteries) rises, the charging capacity will become smaller. Furthermore, the internal charge circuit will be damaged and the life expectancy and safety will be affected easily when the charge circuit is exposed under strong sunlight.

In view of the shortcoming of the traditional solar charger, the present invention provides feasible solutions for the problems.

The primary object of the present invention is to provide a extendable and angle-adjustable solar charger, and the solar panel can be extended from the charging base to a desired height and an angle of elevation towards light to obtain solar radiation energy at a better light absorption position, so as to enhance the energy conversion efficiency.
Another object of the present invention is to provide a extendable and angle-adjustable solar charger that can avoid direct sunlight on the charging base and a reduction of charging capacity of the rechargeable batteries, and also can prevent the internal charge control circuit from being situated at high temperature or getting wet by rains, so as to enhance the life expectance and safety of the solar charger.
In order to achieve the above-mentioned objects, an extendable and angle-adjustable solar charger includes:
a) a charging base, having a charging slot disposed at a surface of the charging base, for putting in a rechargeable batteries and a charge control circuit disposed inside the charging base;
b) a solar panel, having a solar chip and a substrate for positioning the solar chip; and
c) two extending elements, made of an electrically conductive material and disposed parallel to each other, and forming a first pivoting portion disposed at the bottom of the extending element and pivotally coupled to positive and negative terminals of the charge control circuit of the charging base and electrically connected, and a second pivoting portion disposed at the top of the extending element and pivotally coupled to anode and cathode plates of the solar panel and electrically connected, such that the solar panel can be folded and stored horizontally on a surface of the charging base, or the extending element can be extended upward and spread open from an edge to adjust the light absorption position and the angle of elevation towards light of the first and second pivoting portions.

FIG. 1 is a perspective view of a traditional solar charger;
FIG. 2 is a schematic view of spreading open a traditional solar charger;
FIG. 3 is an exploded view of a preferred embodiment of the present invention;
FIG. 3A an exploded view of another preferred embodiment of the present invention;
FIG. 4 is a perspective view of a preferred embodiment of the present invention;
FIG. 5 is a schematic view of spreading open a solar charger in accordance with a preferred embodiment of the present invention;
FIG. 6 is a schematic view of storing a solar charger in accordance with a preferred embodiment of the present invention;
FIG. 7 is a cross-sectional view of Section 7-7 as depicted in FIG. 6;
FIG. 8 is a schematic view of a referenced application in accordance with a preferred embodiment of the present invention;
FIG. 9 is a schematic view of a referenced application in accordance with another preferred embodiment of the present invention;
FIG. 10 is a schematic view of another preferred embodiment of the present invention;
FIG. 11 is a schematic view of a referenced application in accordance with another preferred embodiment of the present invention;
FIGS. 11A and 11B are schematic views of referenced applications in accordance with a further preferred embodiment of the present invention; and
FIG. 12 is a circuit diagram of the present invention.

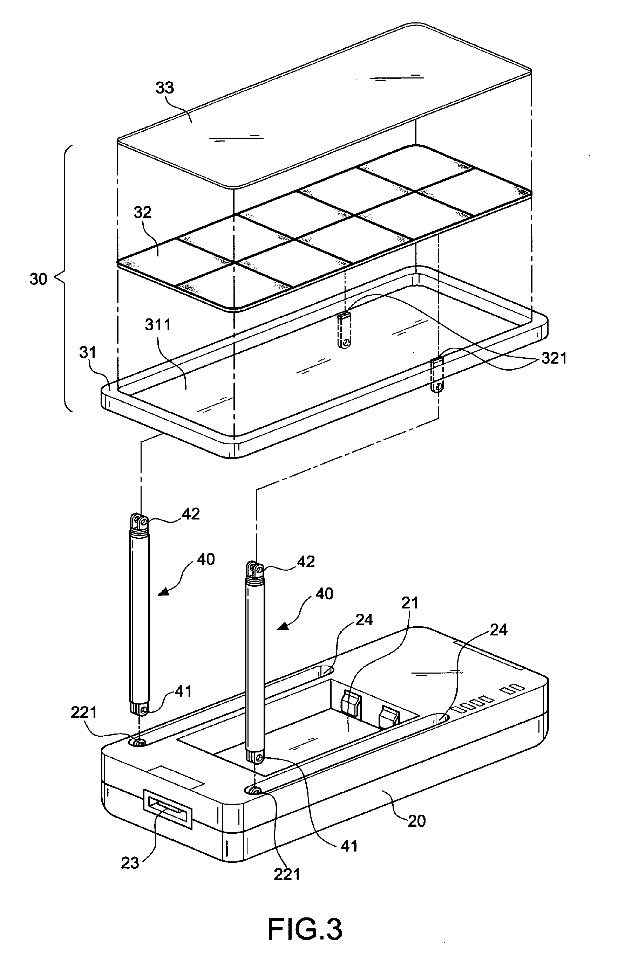

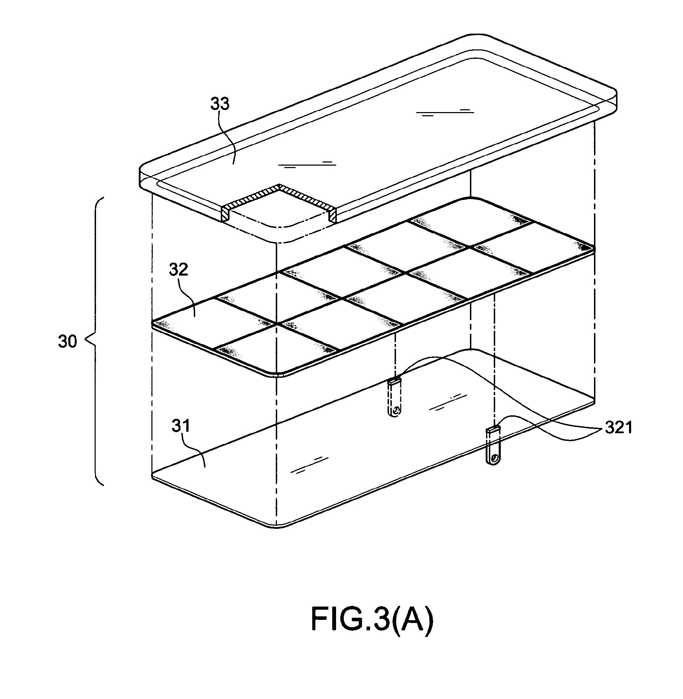

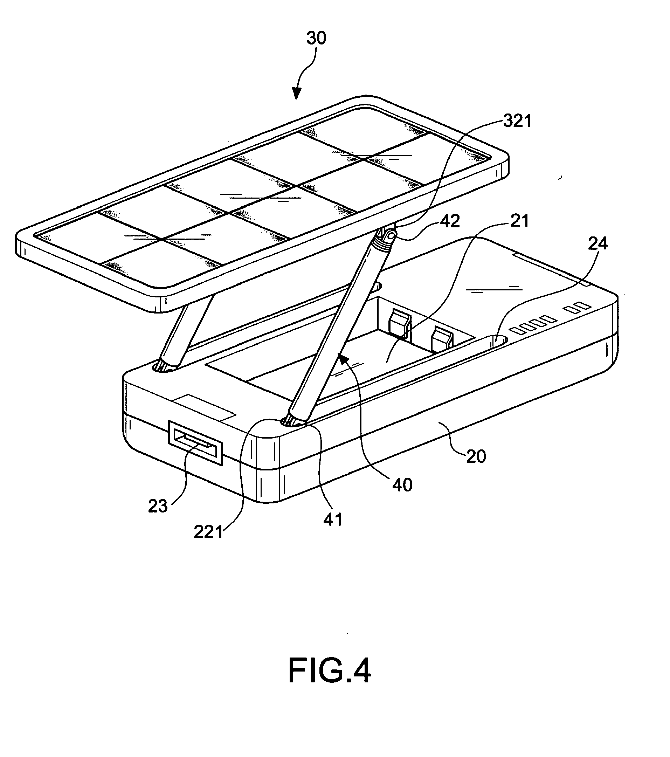

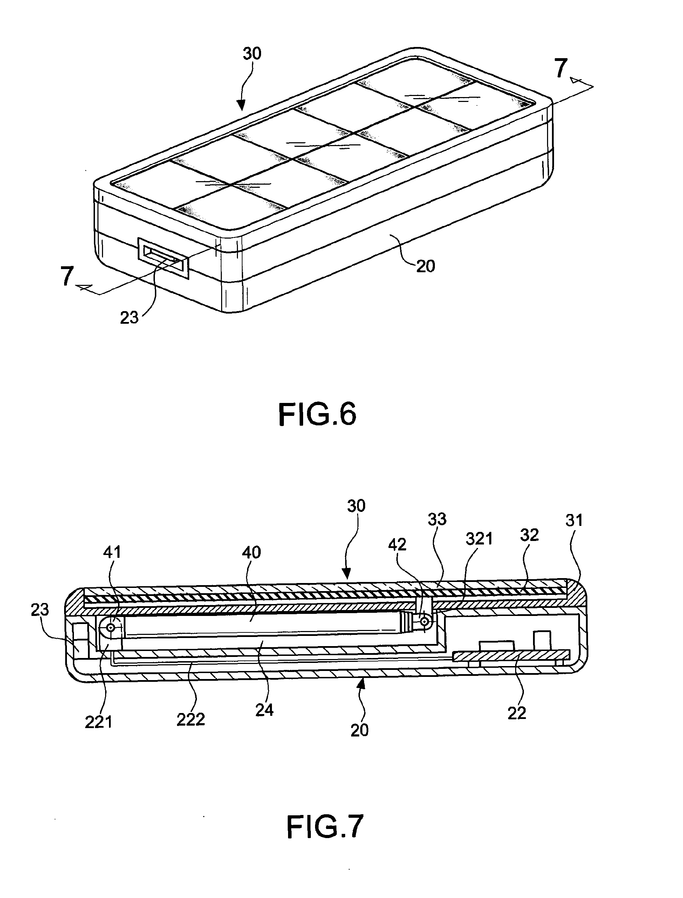

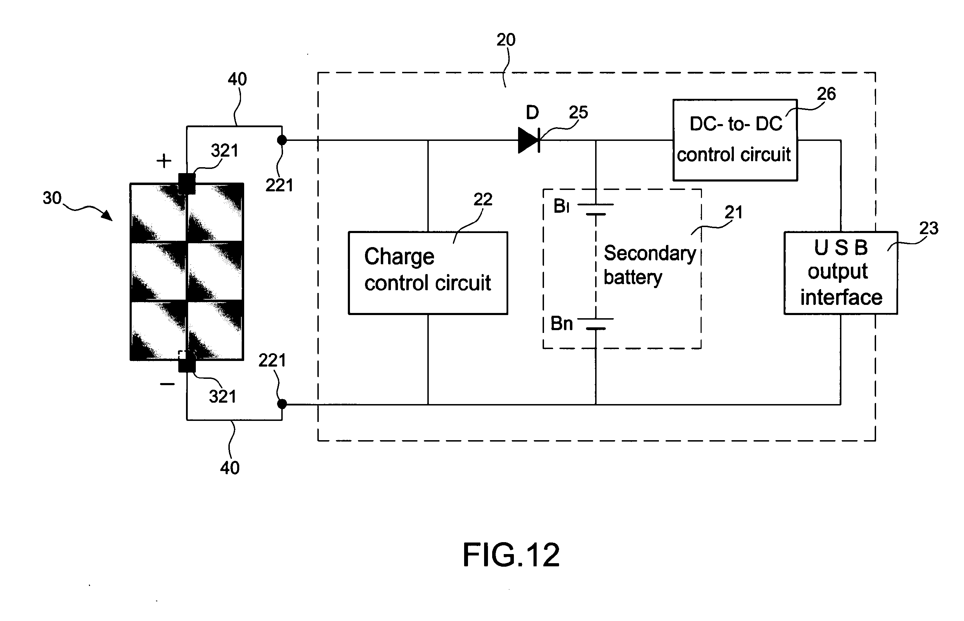

Referring to FIGS. 3 and 4 for an exploded view and a perspective view of a preferred embodiment of the present invention, the solar charger of the invention comprises the following elements:
A charging base 20 includes a charging slot 21 disposed on a surface of the charging base 20 for installing a rechargeable battery (not shown in the figures), and the charging slot 21 of this embodiment is situated on the surface of the charging base 20, but not limited to such arrangement. The charging base 20 also includes a charge control circuit 22 (as shown in FIGS. 7 and 12). The rechargeable battery could be a Ni-H battery, a Ni-Cd battery or a Li battery, and the charging slot 21 can be made according to a predetermined type of rechargeable battery. Further, the front end of the charging base 20 includes a USB output interface 23.

A solar panel 30 includes a solar chip 32 and a substrate 31 for positioning and fixing the solar chip 32. The solar chip 32 is an optoelectronic semiconductor chip capable of generating electricity by using sunlight, and the solar chip 32 can output currents in a very short time when receiving a light, and thus such cell is called solar powered cell (or also know as Solar Cell). It is noteworthy to point out that the solar chip 32 is a cell but not a battery. Since the technology of the solar chip is well developed, therefore its operating principle will not be descried here. The present invention utilizes the solar chip, and the anode and cathode plates 321 connected to the bottom of the solar chip are positive and negative electrodes.

The substrate 31 is provided for positioning the solar chip 32 thereon, and thus the embodiment has a groove 311, and the substrate 31 has anode and cathode plates 321 electrically coupled to the solar chip 32.

The groove 311 of the substrate has a light transmitting protective layer 33 disposed on the solar chip 32 and made of a resin material or a light transmitting panel for protecting the solar chip 32 from being damaged by the external environment.

The solar panel 30 is a preferred embodiment, but the solar chip 32 can be disposed on a substrate 31 without a groove as shown in FIG. 3A, and then an n-shape transparent cover is covered on an upper surface of the substrate 31 to form a light transmitting protective layer 33, and its functions are the same as those of the foregoing embodiment, and thus will not be described in details here.

Two extending elements 40 are made of an electrically conductive material and disposed parallel to each other, and its bottom forms a first pivoting portion 41 pivotally and electrically coupled to positive and negative terminals 221 of the charge control circuit 22 of the charging base 20; and the charge control circuit 22 as shown in FIG. 7 is disposed inside the charging base 20, but the positive and negative terminals 221 are exposed from the surface of the charging base 20 and electrically connected to the extending element 40. The top of the extending element 40 forms a second pivoting portion 42 pivotally and electrically coupled to anode and cathode plates 321 of the solar panel 30, and the assembled structure is shown in FIG. 4.

The two extending elements 40 of the preferred embodiment of the present invention not only serve as a medium for passing currents from the solar panel 30 into the charging base 20, but also control the solar panel 30 as shown in FIGS. 6 and 7 such that the solar panel 30 can be stored in a long groove 24 on the surface of the charging base 20 for easy carry and storage. If it is necessary to use the solar charger, the solar panel 30 is lifted from the surface of the charging base 20 by the extending element 40 as shown in FIG. 4 or extended from the edge, such that the first and second pivoting portions 41, 42 can adjust the light absorption position and the angle of elevation towards light.

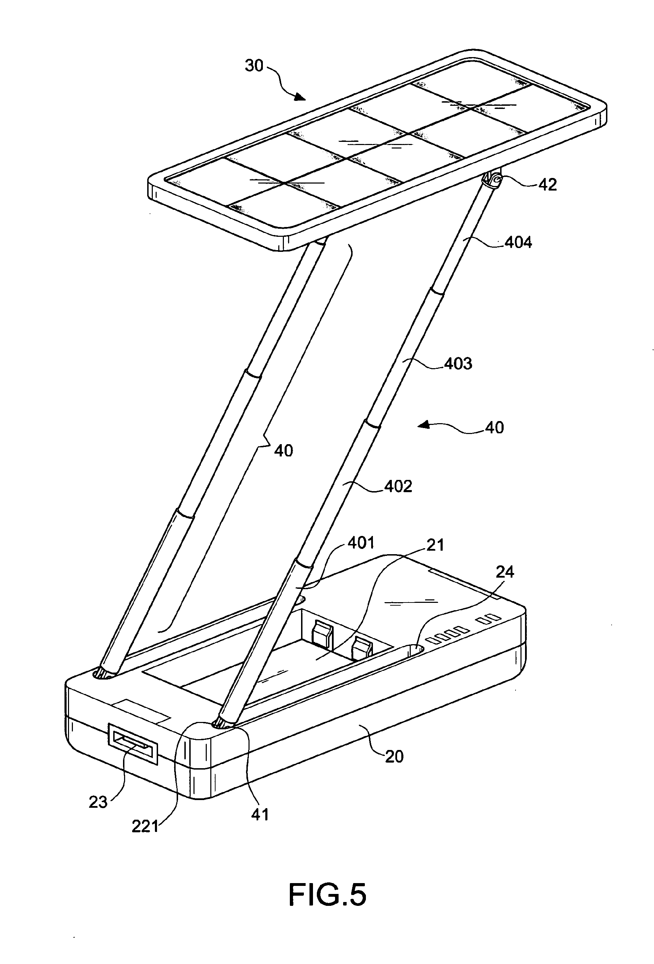

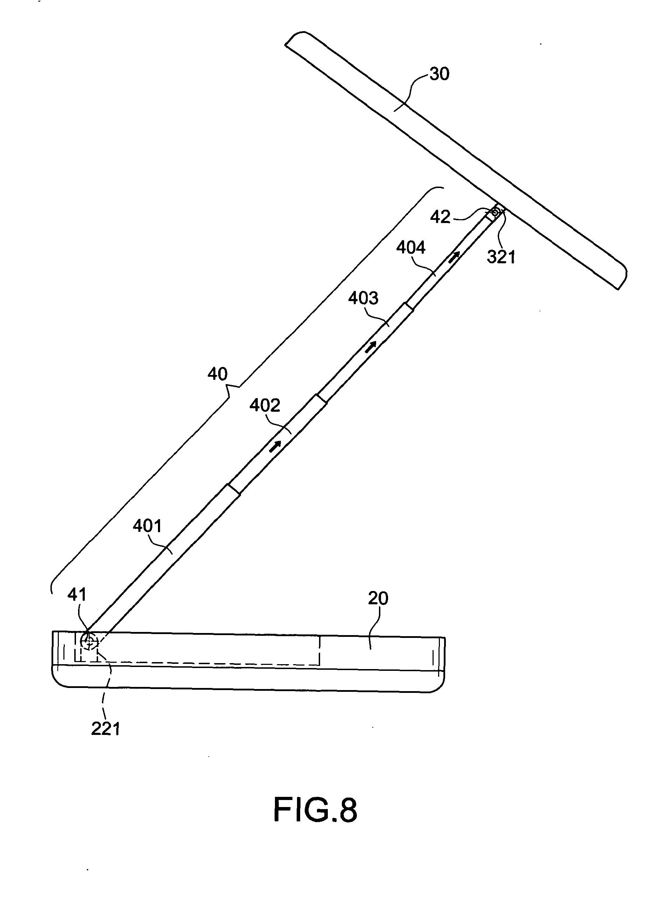

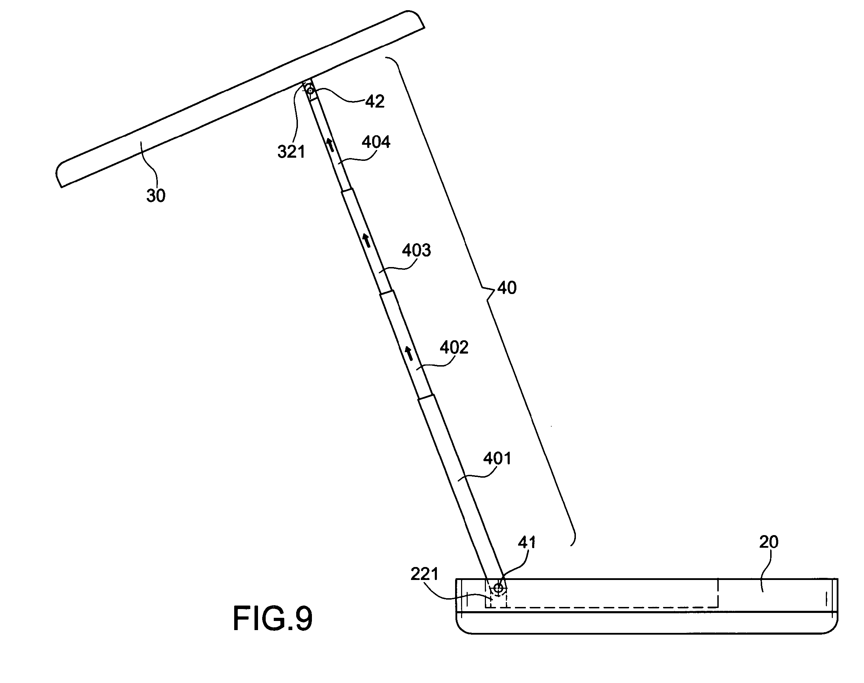

Referring to FIG. 5 for an extending element 40 of a preferred embodiment of the present invention, the extending element 40 comprises a plurality of contractible pipe bodies 401, 402, 403, 404 similar to a contractible antenna that can be extended or drawn back, so as to adjust the required height and extended position as shown in FIGS. 8 and 9 and the angle of elevation towards light for obtaining solar radiation energy from a better light absorption position and improve the solar energy conversion efficiency. Of course, the present invention can prevent the charging base 20 from the direct sunlight, and thus the charging capacity of the rechargeable battery becomes smaller. The invention also prevents the internal charge control circuit 22 from being situated at a high temperature or getting wet by rains, so as to improve the life expectancy and safety.

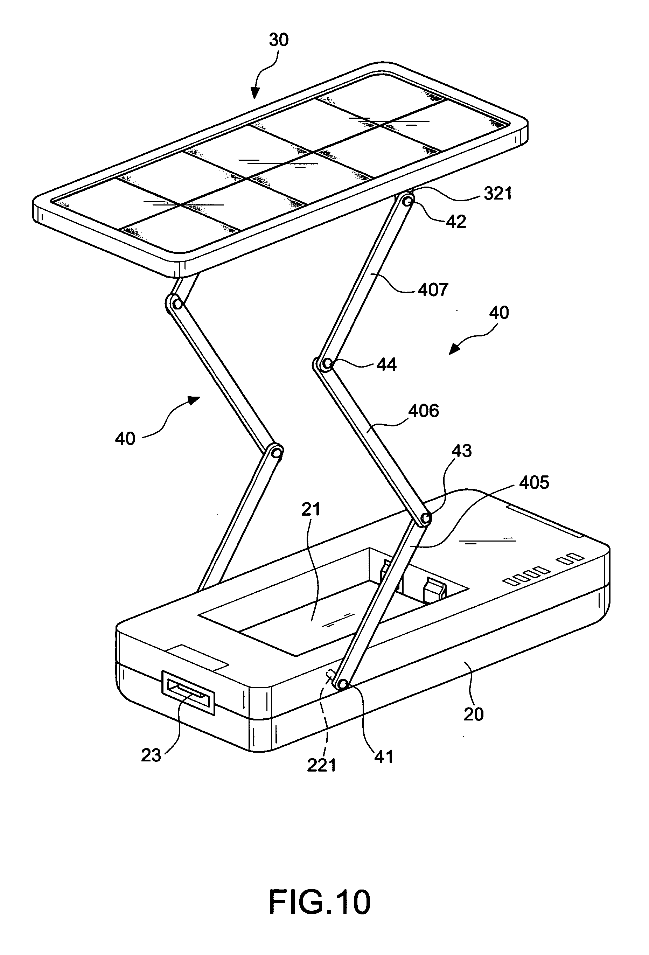

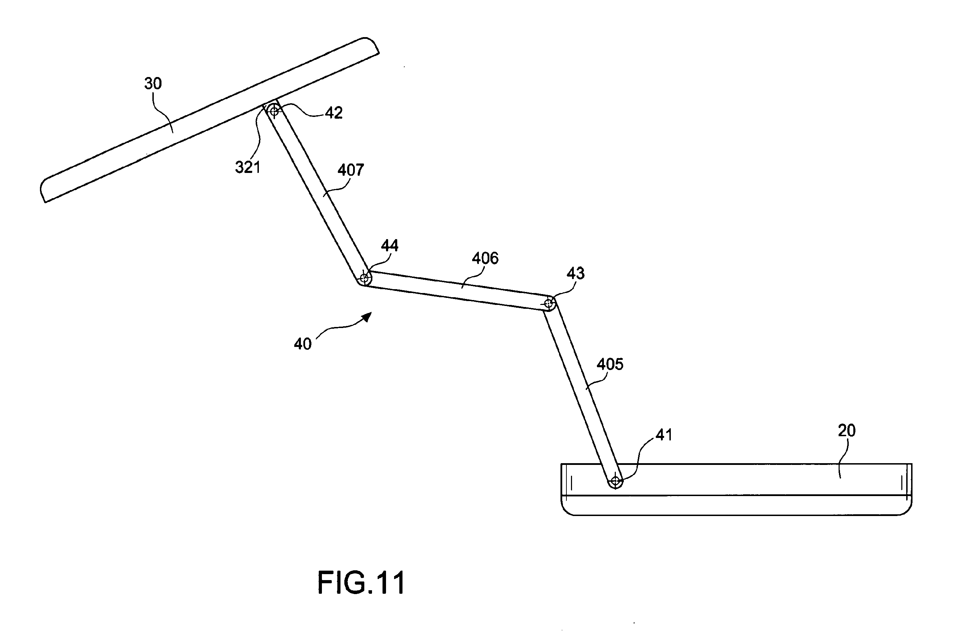

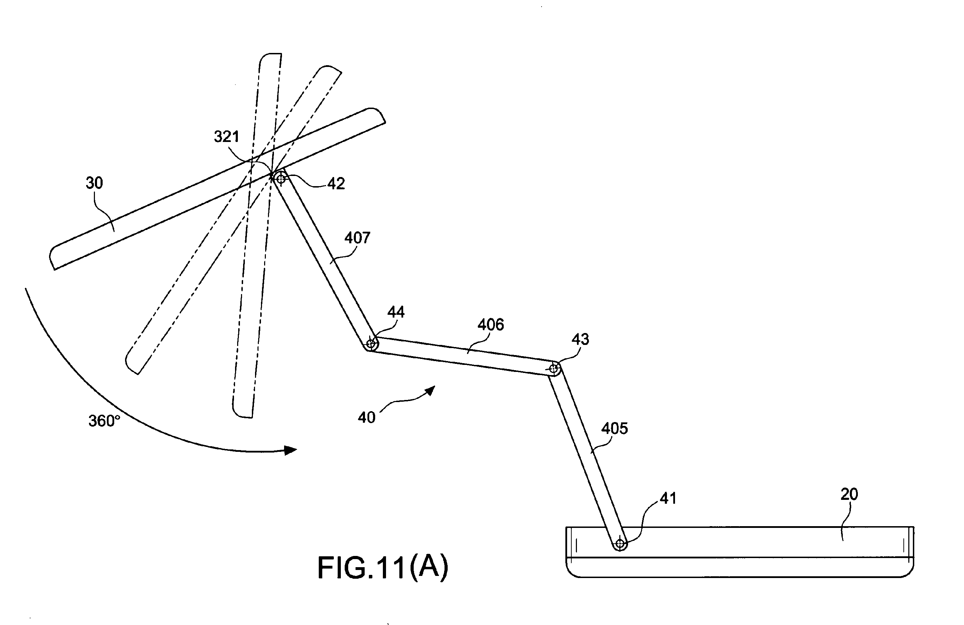

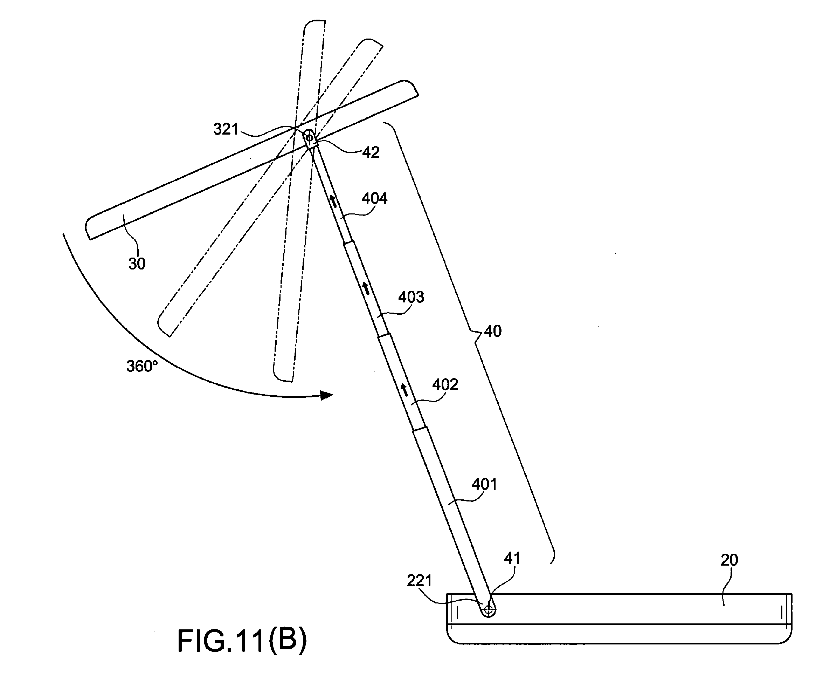

Referring to FIGS. 10 and 11, the extending element 40 of another preferred embodiment of the present invention comprises a plurality of foldable/extendable storing plates 405, 406, 407 disposed parallel to both sides of the charging base 20 and the bottom of the first pivoting portion 41 is pivotally and electrically coupled to positive and negative terminals 221 of the charging base 20, and the overall structure and characteristics are similar to the extending element with contractible pipes, but it can have better extendibility as shown in FIG. 11 since the third and fourth pivoting portions 43, 44 between the contractible plates 405, 406, 407 can be used for extending and adjusting the position and angle for a better extendibility.

Further, the top of the two extending elements 40 forms a second pivoting portion 42 disposed on both lateral sides of the solar panel 30 and electrically connected to the anode and cathode plates 321, and the solar panel 30 can be turned 360° as shown in FIG. 11A for facilitating the adjustment to any angle. Similarly, the second pivoting portion 42 is applicable for the extending element with contractible pipes as shown in FIG. 11B, so that the solar panel 40 between the two extending elements 40 composed of contractible pipes can be turned 360 ° for an angle adjustment.

Referring to FIG. 12 for a circuit diagram of the present invention, the present invention uses the extending element 40 with both ends pivotally and electrically coupled to the anode and cathode plates 321 of the solar panel 30 and the positive and negative terminals 221 of the charge control circuit 22, and the solar panel 30 converts the light energy into the electric energy and passes the current to the charge control circuit 22 for charging the rechargeable batteries B1~Bn in the charging slot 21, and a diode 25 is disposed between the positive terminal of the solar panel 30 and the charging slot 21 for preventing currents from flowing back to the rechargeable batteries B1~Bn. Of course, the charging base 20 containing fully charged rechargeable batteries also has a DC-to-DC control circuit 26 between the positive terminal of the charging slot 21 and the USB output interface 23 to form a backup power supply. Therefore, the present invention also forms a portable backup power supply for charging a portable electronic product such as a mobile phone, a PDA, a MP3 or a notebook computer, in addition to charging rechargeable batteries by solar energy.

Therefore, the present invention adopts a special design of extending elements 40 to overcome the shortcomings of the traditional solar charger that cannot be extended. The invention provides a convenient way of adjusting the light position such as attaching the solar panel 30 onto a window of a car to absorb light energy, and the charging base 20 is situated at a position without direct sunlight in order to prevent the charging base 20 from being damaged by sunlight and rain, such that the solar charger can change its position according to different external environments for a convenient use of the solar charger, so as to maximize the energy conversion efficiency.

Many changes and modifications in the above-described embodiment of the invention can, of course, be carried out without departing from the scope thereof. Accordingly, to promote the progress in science and the useful arts, the invention is disclosed and is intended to be limited only by the scope of the appended claims.

## Claims

1. An extendable and angle-adjustable solar charger, comprising:
a) a charging base (20), having a charging slot (21) disposed at a surface of the charging base, for putting in a rechargeable batteries and a charge control circuit (22) disposed inside the charging base;
b) a solar panel (30), having a solar chip (32) and a substrate (31) for positioning the solar chip; and
c) two extending elements (40), made of an electrically conductive material and disposed parallel to each other, and forming a first pivoting portion (41) disposed at the bottom of the extending element and pivotally coupled to positive and negative terminals (221) of the charge control circuit (22) of the charging base (20) and electrically connected, and a second pivoting portion (42) disposed at the top of the extending element and pivotally coupled to anode and cathode plates (321) of the solar panel (30) and electrically connected, such that the solar panel (30) can be folded and stored horizontally on a surface of the charging base (20), or the extending element (40) can be extended upward and spread open from an edge to adjust the light absorption position and the angle of elevation towards light of the first and second pivoting portions (41), (42).

2. The extendable and angle-adjustable solar charger as recited in claim 1, wherein the solar chip (32) is disposed in a substrate (31) having a groove (311), and the substrate (31) has anode and cathode plates (321) electrically coupled to the solar chip (32) and a light transmitting protective layer (33) disposed on an upper surface of the substrate.

3. The extendable and angle-adjustable solar charger as recited in claim 2, wherein the light transmitting protective layer (33) is comprises of a resin panel or a light transmitting panel.

4. The extendable and angle-adjustable solar charger as recited in claim 1, wherein the solar chip (32) is disposed on a substrate (31), and the substrate (31) has anode and cathode plates (321) coupled to the solar chip (32), and a light transmitting protective layer (33) having an n-shape transparent cover on an upper surface of the light transmitting protective layer (33).

5. The extendable and angle-adjustable solar charger as recited in claim 1, wherein the charging base (20) has a long groove disposed separately on both sides of the charging slot (21) for folding and storing the extending element (40) horizontally.

6. The extendable and angle-adjustable solar charger as recited in claim 1, wherein the extending element (40) comprises a tube body having a plurality of contractible sections (401), (402), (403), (404).

7. The extendable and angle-adjustable solar charger as recited in claim 6, wherein the extending element (40) comprises a folding plate having a plurality of foldable/extendable sections (405), (406), (407).

8. The extendable and angle-adjustable solar charger as recited in claim 7, wherein the foldable/extendable sections (405), (406), (407) are disposed parallel to both sides of the charging base (20).

9. The extendable and angle-adjustable solar charger as recited in claim 1, wherein the front end of the charging base (20) includes a USB output interface (23), and wherein a DC-to-DC control circuit (26) is interposed between the positive terminal of the charging slot (21) and the USB output interface (23), and wherein a diode (25) is disposed between the positive terminal of the solar panel (30) and the charging slot (21) for preventing currents from flowing back to the rechargeable batteries.

10. The extendable and angle-adjustable solar charger as recited in claim 1, wherein the top of the extending element (40) forms a second pivoting portion (42) pivotally and electrically coupled to anode and cathode plates (321) of the solar panel (30).
